# EUROPEAN PATENT SPECIFICATION

(11) **EP 3 579 618 B1**
(45) Date of publication and mention of the grant of the patent: **10.05.2023**
(21) Application number: 18176824.3
(22) Date of filing: 08.06.2018
(51) Int. Cl.: H04W 36/24, H04W 36/22, H04W 36/30, H04W 36/38, H04W 36/32, H04W 84/12

(54) **A STEERING ALGORITHM CONTROLLER FOR WLANS**
LENKALGORITHMUSSTEUERGERÄT FÜR WLANS
CONTRÔLEUR D'ALGORITHME DE DIRECTION POUR DES RÉSEAUX LOCAUX SANS FIL

(43) Date of publication of application: 11.12.2019
(73) Proprietor: Nokia Solutions and Networks Oy, 02610 Espoo (FI)
(72) Inventor: Ligata, Amir, 2018 Antwerpen (BE)
(74) Representative: IP HILLS NV

(56) References cited:
- WO-A1-2016/160230
- GB-A- 2 532 788
- US-A1- 2013 143 542
- US-A1- 2015 045 028
- Deliverable D4: "Public/Confidential page 1 of 130 SHARING SELF-ORGANIZED HETEROGENEOUS ADVANCED RADIO NETWORKS GENERATION New opportunities, challenges and innovative concept candidates for SON/Heterogeneous Networks", , 11 July 2014 (2014-07-11), XP055242353, Retrieved from the Internet: URL:http://www-sharing.cea.fr/assets/files /SHARING deliverable D4.1 - New opportunities, challenges and innovative concept candidates for SON-Heterogeneous Networks.pdf [retrieved on 2016-01-18]

## Description

### Technical Field

Various example embodiments relate to a steering algorithm controller for controlling a steering algorithm whose objective is to select an optimal radio interface / radio band for a wireless station amongst the available access points in a wireless local area network or WLAN, like for instance the main WiFi access point, WiFi repeaters and WiFi extenders deployed across home to create a wireless home network.

### Background

Wireless local area networks, abbreviated WLANs, like for instance home WiFi networks, are continuously growing, both in terms of coverage area and number of devices. To tackle the coverage problem, multiple access points are typically deployed across a single building, for instance a single house or office. These access points may comprise a main access point, repeaters, extenders, etc. The various access points may support various technology standards and consequently support the same or different radio interfaces / frequency bands for communication with wireless stations. Examples of such radio interfaces / frequency bands are the 2.4 GHz WiFi radio interface and the 5.0 GHz WiFi radio interface. The different access points are typically interconnected through wireless links, resulting in a wireless mesh network orchestrated by the main access point. To exploit the wireless mesh network considering the dynamics of wireless stations in terms of mobility and demand, algorithms have been deployed in access points to improve the performance wireless stations and user experience for users of such wireless stations, i.e. client devices like smart phones, tablet computers, laptop computers, media players, etc. These algorithms are generally known as steering algorithms because they steer wireless stations in their selection of an optimal radio interface amongst the available access points in a WLAN. As an example, a wireless station will be steered to the 5.0 GHz radio interface if it is sufficiently close to an access point supporting this radio interface. When the wireless station is moving away from this access point, it will be steered towards the 2.4 GHz radio interface supported by this access point or it will be steered to a repeater. As another example, increased demand for TV service by one or several wireless stations over the 5.0 GHz radio interface may be given priority over demand for other services as a result of which wireless stations that demand such other services may be steered towards the 2.4 GHz radio interface.

Steering algorithms are not standardized. They are vendor specific and run continuously, often on seconds granularity. This can result in frequent triggering of steering events. A steering event might not always have the expected effect in terms of performance improvement. Moreover, steering events can be lengthy in time, cause service disruptions and/or user experience deterioration. However, the vendors can expose their steering algorithm parameters for monitoring and tuning purposes.

United States Patent Application US 2013/143542 A1 describes an improved steering algorithm that selects the access technology (UMTS, LTE, Wifi, ...) for a mobile device, or that selects the access interface within a single access technology based on the mobility (location of the mobile device), congestion and usage patterns (channel utilization by the mobile device and access nodes).

United States Patent Application US 2015/045028 A1 describes handover in cellular networks. Handover may fail for several reasons. US 2015/045028 A1 proposes to assess the performance of a handover policy and to tune the handover policy if the performance is insufficient.

### Summary

Amongst others, it is an object of embodiments of the invention to be able to monitor a steering algorithm and tune a steering algorithm without manual, time and effort consuming, cumbersome and error prone interventions of technicians at the location where the access points are deployed. It is a further object of embodiments of the invention to find an adequate response to the fact that default settings of a steering algorithm are the same for all wireless stations whereas these wireless stations behave highly differently. Similarly, it is an object of embodiments of the invention to find an adequate response to the fact that default settings of a steering algorithm are the same for all homes or offices whereas different homes or offices typically have demand distributions and wireless station characteristics that highly differ. It is also an object of embodiments of the invention to provide an adaptive and scalable solution that avoids or minimizes situations wherein the steering algorithm must be disabled.

This object is achieved, according to a first example aspect of the present disclosure, by a steering algorithm controller as defined by claim 1, for controlling a steering algorithm in a wireless local area network, the steering algorithm selecting for one or more wireless station an optimal radio interface amongst available access points in the wireless local area network, the steering algorithm controller comprising:
- wireless station data collection means configured to collect channel utilization and performance data for the one or more wireless station;
- radio interface data collection means configured to collect channel utilization and performance data for the one or more radio interface;
- steering algorithm performance assessment means configured to analyse steering events resulting from the steering algorithm based on a comparison of channel utilization before and after a steering event by the steering algorithm, and to analyse the channel utilization and performance data for the one or more wireless station and the one or more radio interface, and to determine therefrom a performance score for the steering algorithm;
- wireless station behaviour tracking means configured to analyse behaviour of the one or more wireless station, the wireless station behaviour tracking means comprising:
   - mobility analysis means configured to analyse mobility of the one or more wireless station and classify each of the one or more wireless station respectively as highly mobile, occasionally mobile, or stationary;
   - demand analysis means configured to analyse demands by the one or more wireless station for respective services; and
   - demand distribution analysis means configured to analyse demands for the respective services across the one or more radio interfaces, and to determine therefrom a service demand distribution;
- profile estimation means configured to determine therefrom respective behaviour profiles; and
- steering algorithm tuning means configured to tune parameters of the steering algorithm based on the performance score and the behaviour profiles of the one or more wireless stations.

Thus, embodiments of the steering algorithm controller regularly assess the performance of a steering algorithm. Thereto, channel utilization and performance data are collected per wireless station. The channel utilization and performance data may take various forms but at least indicate when a channel is used by a wireless station and how effective the data transfer was between the wireless station and the WLAN over this channel. Examples of channel utilization and performance data that may be collected for a wireless station are the channel utilization or airtime, the Received Signal Strength Indicator or RSSI, the time out period, the bit error rate, the retransmission rate, etc. The channel utilization and performance data are collected from a software agent running in access points that uploads these data into a cloud-based database that is accessible by an operator. In addition thereto, the channel utilization and performance data are collected per radio interface available amongst the access points in the WLAN. Again, this channel information and performance data may take various forms but at least indicates when a channel is used by a radio interface and how effective the data transfer over this channel by the radio interface was. Examples of channel utilization and performance data that may be collected for a radio interface are the channel utilization or airtime, the bit error rate, the retransmission rate, the neighbouring radio interface interference, the average noise, etc. The channel utilization and performance data are collected from a software agent running in access points that uploads these data into a cloud-based database that is accessible by an operator. Using the collected channel utilization and performance data, the steering algorithm controller evaluates the performance of the steering algorithm: the steering algorithm controller thereto at least verifies if the performance has improved as a result of a steering event, or otherwise if a steering event had a negative impact on the performance and consequently on the user experience. Over a larger time window of typically days or weeks, the steering algorithm controller further monitors the behaviour of wireless stations in terms of mobility and demands for services. Patterns are recognized and used to maintain behaviour profiles per wireless station. The behaviour profiles of wireless stations together with the performance assessment of the steering algorithm, i.e. knowledge on the performance improvement/degradation as a result of past steering events, are then used by the steering algorithm controller, to adjust the steering algorithm parameters such that future steering events take place more frequently, less frequently, or are triggered by different situations as needed to improve the effectiveness of the steering algorithm.

In the steering algorithm controller, wireless station behaviour tracking entails three components. Firstly, the mobility of the wireless station is monitored in order to detect daily / weekly / monthly mobility patterns. For instance, a particular movement may be detected daily on weekdays around a specific time, triggering a steering event. At least, the analysis of a wireless station's mobility over a period of weeks or months must enable to classify the wireless station either as highly mobile, occasionally mobile or relatively stationary. The skilled person will appreciate that a further refinement of the classification of wireless stations on the basis of detected mobility behaviour may be contemplated in more advanced embodiments of the steering algorithm controller. Such classification of wireless devices may be exploited to infer similar steering algorithm settings on wireless devices that belong to the same class. Secondly, the demand of wireless stations for certain services is monitored in order to detect daily / weekly / monthly patterns in the throughput and type of services demanded by a wireless station. A service demand profile is derived therefrom for each wireless station. Thirdly, the demand for throughput and services is evaluated over the entire WLAN, such that temporal demand across all radio interfaces and all wireless stations can be evaluated against available resources and steering of certain wireless stations towards certain radio interfaces can be inferred to avoid wireless station starvation and/or reduced user experience.

The value of a steering algorithm controller according to embodiments of the invention is two-fold. Firstly, steering algorithm assessment is done per wireless station of a longer period of time to capture potential improvements that steering events introduced. Secondly, the behaviour of wireless stations is analysed in order to generate profiles of movements and demands such that the steering algorithm parameters can be tuned to accommodate wireless station behaviour in similar situations.

In example embodiments of the steering algorithm controller defined by claim 2, the wireless station data collection means and the radio interface data collection means are configured to collect the channel utilization and performance data at a frequency ranging from once per minute up to once per hour.

Indeed, compared to the wireless station behaviour tracking that typically runs over a larger time window from several days up to several weeks, the channel utilization and performance data are collected more frequently, at a pace of for instance once per minute up to once per hour. The frequency of channel utilization and performance data collection may be tuneable as more granular data may be required to assess the effect of certain steering events.

In embodiments of the steering algorithm controller defined by claim 3, the wireless station behaviour tracking means are configured to analyse behaviour of the one or more wireless station at a frequency ranging from once per day up to once per month.

Thus, in comparison with the channel utilization and performance data that are used to assess the effectiveness of steering events triggered by a steering algorithm, the mobility and service demands of a wireless station will be monitored at a slower rate, typically ranging from once per day to once per week or even once per month. The goal is to detect daily or weekly patterns of movements and/or service demands such that certain behaviour can be associated with steering events and the steering algorithm can be tuned to steer the future selection of radio interfaces by a wireless station with improved overall performance and user experience.

In sample embodiments of the steering algorithm controller defined by claim 4, the steering algorithm performance assessment means and the steering algorithm tuning means are configured to iteratively determine the performance score for the steering algorithm and to iteratively tune the parameters of the steering algorithm.

Indeed, once the parameters of the steering algorithm are tuned, embodiments of the steering algorithm controller preferably analyse how well the wireless stations perform under the recently applied steering algorithm settings. Channel utilization and performance data are collected per wireless station and per radio interface and used in a new iteration of the steering algorithm performance assessment. Situations wherein the wireless station's performance was not improved, are further analysed to better tune the steering algorithm parameters.

In sample embodiments of the steering algorithm controller defined by claim 5, the steering algorithm performance assessment means comprises:
- event analysing means configured to analyse success rate of the steering events per wireless station and based thereon classify the one or more wireless station as steering eligible or non-steering eligible;
- performance analysing means configured to quantify performance improvement or degradation as a result of the steering events and to determine therefrom the performance score.

Thus, advantageous embodiments of the steering algorithm controller analyse statistics over all steering events for a given wireless station. This event analysis per wireless station may for instance involve counting the number of triggered steering events within a certain time interval, counting the number of successful steering events (for instance steering events that are implemented within 10 seconds), counting the number of failed steering events (for instance steering events that are not yet implemented after 2 minutes), counting the number of fast failed steering events (for instance steering events that become implemented too slowly, within the time interval ranging from 10 seconds to 2 minutes), counting the time-out period resulting from steering events, counting the average reconnection time after a steering event, etc. The event analysis allows to classify the wireless station under consideration as either steering eligible or as non-steering eligible. A rather stationary wireless station for instance doesn't require steering and should be identified as non-steering eligible, whereas a highly mobile wireless station should be identified as steering eligible. Apart from determining the frequency and eligibility of wireless stations for steering events, the performance alteration caused by steering events is analysed for a given wireless station. By analysing for instance the improvement in achievable throughput, the reduction in retransmission rate, the reduction in bit error rate, the increase in airtime, etc., the performance analyser that forms part of embodiments of the steering algorithm controller quantifies whether the performance was improved in a performance score. From the performance score, it is concluded whether a steering event was obsolete or useful.

In sample embodiments of the steering algorithm controller defined by claim 6, the steering algorithm tuning means is configured to perform one or more of the following settings per wireless station:
- disable the steering algorithm for the wireless station in case of a poor performance score after a steering event;
- adapt the steering algorithm to infer steering events for the wireless station in case of a poor performance score in absence of a steering event; and
- replicate settings of the steering algorithm for other wireless stations with similar behaviour profile to the wireless station in case of a good performance score.

Thus, in view of the steering algorithm's performance assessment and the wireless station behaviour tracking, the settings of the steering algorithm may be tuned per wireless station. When a steering algorithm is performing poorly for a wireless station and the wireless station's profile indicates that steering is not really needed for that wireless station, the wireless station may be marked as steering non-compliant and the steering algorithm may be disabled for that wireless station. When a wireless station is performing poorly but no steering events are triggered, new steering algorithm settings may be derived and installed for that wireless station that better address the wireless device's profile and infer steering events more frequently. When the steering algorithm's performance assessment reveals that the steering algorithm improves the performance of a wireless station substantially, the wireless station profiles may be analysed to detect wireless stations with a similar mobility and demand profile whereto the steering algorithm settings can be replicated. The skilled person shall appreciate that tuning the steering algorithm is not limited to the above examples. Alternative implementations can be contemplated, the result of which always will be a new steering algorithm that is wireless station profile dependent and adaptive over time in view of its performance and/or profile changes.

The above defined object is achieved, according to a second example aspect of the present disclosure, by a method for controlling a steering algorithm in a wireless local area network as defined by claim 7, the steering algorithm selecting for one or more wireless station an optimal radio interface amongst available access points in the wireless local area network, the method comprising:
- collecting channel utilization and performance data for the one or more wireless station;
- collecting channel utilization and performance data for the one or more radio interface;
- analysing steering events resulting from the steering algorithm based on a comparison of channel utilization before and after a steering event by the steering algorithm, analysing the channel utilization and performance data for the one or more wireless station and the one or more radio interface, and determining therefrom a performance score for the steering algorithm;
- analysing behaviour of the one or more wireless station comprising:
   - analysing mobility of the one or more wireless station and classifying each of the one or more wireless station respectively as highly mobile, occasionally mobile, or stationary;
   - analysing demands by the one or more wireless station for respective services; and
   - analysing demands for the respective services across the one or more radio interfaces, and to determine therefrom a service demand distribution;
- determining therefrom behaviour profiles; and
- tuning parameters of the steering algorithm based on the performance score and the behaviour profiles of the one or more wireless stations.

The above defined object is also achieved, according to a third example aspect of the present disclosure, by a computer program product as defined by claim 8, comprising computer-executable instructions for causing a steering algorithm controller to perform at least the following:
- collecting channel utilization and performance data for the one or more wireless station;
- collecting channel utilization and performance data for the one or more radio interface;
- analysing steering events resulting from the steering algorithm based on a comparison of channel utilization before and after a steering event by the steering algorithm, analysing the channel utilization and performance data for the one or more wireless station and the one or more radio interface, and determining therefrom a performance score for the steering algorithm;
- analysing behaviour of the one or more wireless stationcomprising:
   - analysing mobility of the one or more wireless station and classifying each of the one or more wireless station respectively as highly mobile, occasionally mobile, or stationary;
   - analysing demands by the one or more wireless station for respective services; and
   - analysing demands for the respective services across the one or more radio interfaces, and to determine therefrom a service demand distribution;
- determining therefrom behaviour profiles; and
- tuning parameters of the steering algorithm based on the performance score and the behaviour profiles of the one or more wireless stations.

The above defined object is achieved, according to a fourth example aspect of the present disclosure, by a computer readable storage medium as defined by claim 9, comprising a computer program comprising computer-executable instructions for performing the following steps when the program is run on the steering algorithm controller of one of claims 1-6:
- collecting channel utilization and performance data for the one or more wireless station;
- collecting channel utilization and performance data for the one or more radio interface;
- analysing steering events resulting from the steering algorithm based on a comparison of channel utilization before and after a steering event by the steering algorithm, analysing the channel utilization and performance data for the one or more wireless station and the one or more radio interface, and determining therefrom a performance score for the steering algorithm;
- analysing behaviour of the one or more wireless station comprising:
   - analysing mobility of the one or more wireless station and classifying each of the one or more wireless station respectively as highly mobile, occasionally mobile, or stationary;
   - analysing demands by the one or more wireless station for respective services; and
   - analysing demands for the respective services across the one or more radio interfaces, and to determine therefrom a service demand distribution;
- determining therefrom behaviour profiles; and
- tuning parameters of the steering algorithm based on the performance score and the behaviour profiles of the one or more wireless stations.

### Brief Description of the Drawings

Some example embodiments will now be described with reference to the accompanying drawings.
Fig. 1 illustrates an example embodiment of a steering algorithm controller 100 according to the invention;
Fig. 2 is a functional block scheme of an example embodiment of the steering algorithm controller 200 according to the invention;
Fig. 3 illustrates an example embodiment of the method for controlling a steering algorithm according to the invention; and
Fig. 4 shows an example embodiment of a suitable computing system 400 for performing one or several steps in embodiments of the method for controlling a steering algorithm according to the invention.

### Detailed Description of Embodiment(s)

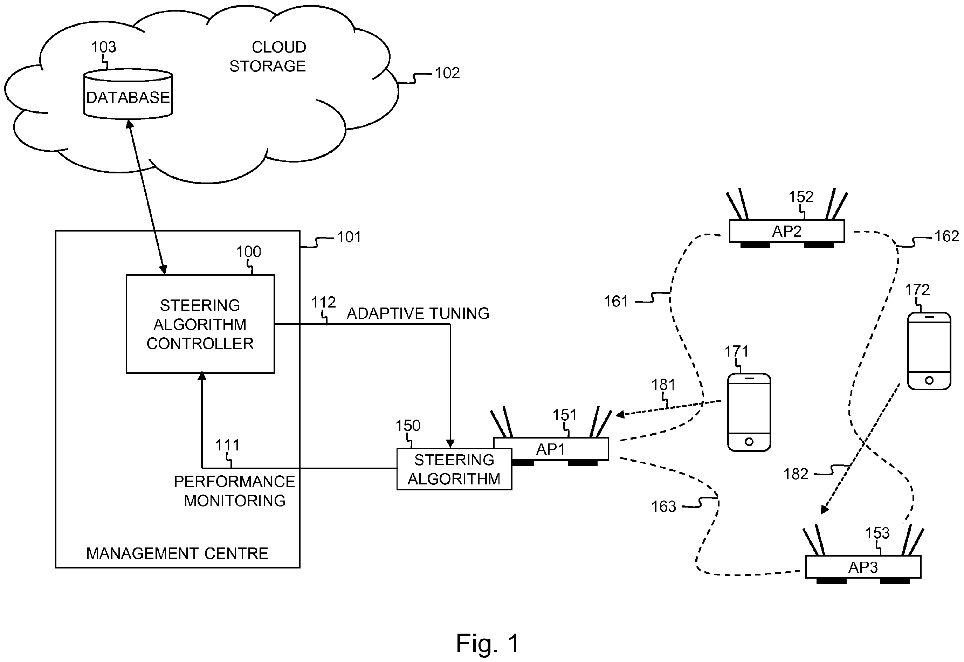

Fig. 1 shows a wireless local area network or WLAN that comprises a first access point AP1 or 151, a second access point AP2 or 152 and a third access point AP3 or 153. The second and third access points 152 and 153 may be extenders of the first access point 151. The first access point 151 and second access point 152 are connected through a wireless link 161, the second access point 152 and third access point 153 are connected through a wireless link 162, and the third access point 153 and first access point 151 are connected through a wireless link 163. The access points 151, 152, 153 and the wireless links 161, 162, 163 jointly constitute a wireless mesh network. Each of the access points 151, 152, 153 has plural radio interfaces, for instance a 2.4 GHz radio interface and a 5.0 GHz radio interface that can be used by wireless stations 171, 172 within the WLAN coverage area to connect for instance to the Internet. In order to steer the wireless stations 171, 172 towards preferred radio interfaces available within the WLAN, the first access point 151 is hosting a steering algorithm 150. As denoted by arrow 181 in Fig 1, the wireless station 171 for instance is steered towards a radio interface of the first access point 151, for example the 5.0 GHz radio interface of access node 151. Similarly, arrow 182 in Fig. 1 indicates that wireless station 172 is steered towards a radio interface of the third access point 153, for example the 2.4 GHz radio interface of access point 153. In view of movements made by a wireless station and/or service demands by such wireless station, the steering algorithm 150 might steer the wireless station to another radio interface available in the WLAN, in particular when it is expected that the user experience might improve as a result thereof.

Fig. 1 further shows a steering algorithm controller 100 in the management centre 101 of a network operator. The steering algorithm controller 100 automatically assesses the performance of the steering algorithm 150 and adaptively tunes the steering algorithm 150 per wireless station to iteratively improve the performance of the steering algorithm 150. Figure 1 depicts the block diagram and structure of the proposed solution. The automated performance assessment in steering algorithm controller 100 computes how well the steering algorithm 150 performs based on input data 111 provided by the access point 151, which collected these data for all wireless stations 171, 172 and all radio interfaces available in the WLAN. The performance monitoring data 111 collected from the access point 151 for example comprise for each wireless station 171, 172 the channel utilization or airtime, the RSSI, the time out period, the bit error rate and the retransmission rate. In adition the performance monitoring data 111 may comprise for instance for each radio interface the channel utilization or airtime, the retransmission rate and the neighbouring radio interfaces' interference. The steering algorithm controller 111 collects this information for example at a pace of once every 5 minutes and stores the collected data in a database 103 that may be located in a cloud based storage 102. Regularly, the steering algorithm controller 100 uses the collected data to evaluate the performance of every wireless station 171, 172. The steering algorithm controller 100 evaluates the performance in terms of channel utilization and performance data before and after the steering algorithm 150 triggered a steering event The performance assessment executed by the steering algorithm controller 100 is based on analysis of the collected channel utilization and performance data 111 but also considers for instance how long it took for a wireless station 171, 172 to reconnect to another radio interface. Following the performance assessment which is performed more frequently, the steering algorithm controller 100 adaptively tunes the steering algorithm 150 per wireless station as is indicated by arrow 112 in Fig. 1. In order to tune the steering algorithm 150 adaptively, the steering algorithm controller 100 also considers the mobility and service demand behaviour of the wireless stations 171, 172. The value of the steering algorithm controller 100 consequently is twofold. Firstly, it provides an insight into how wireless stations 171, 172 are impacted by steering orchastrated by the main access point 151 over a longer period of time. Secondly, following the outcome of an assessment phase, it adaptively tunes the steering parameters of the steering algorithm 150 to optimize the impact of the steering algorithm on the performance of connected wireless stations 171, 172 in view of expected behaviour.

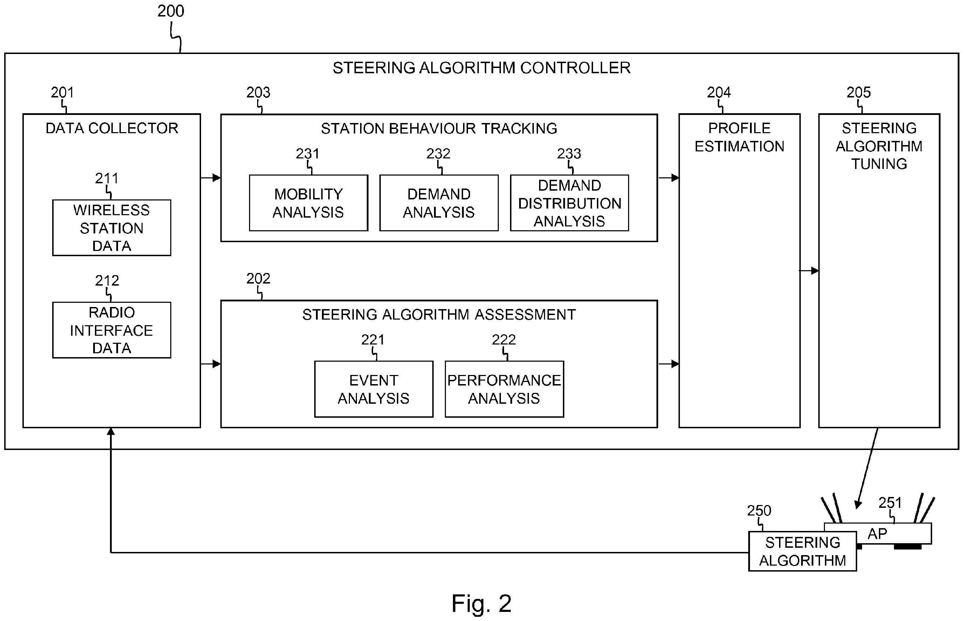

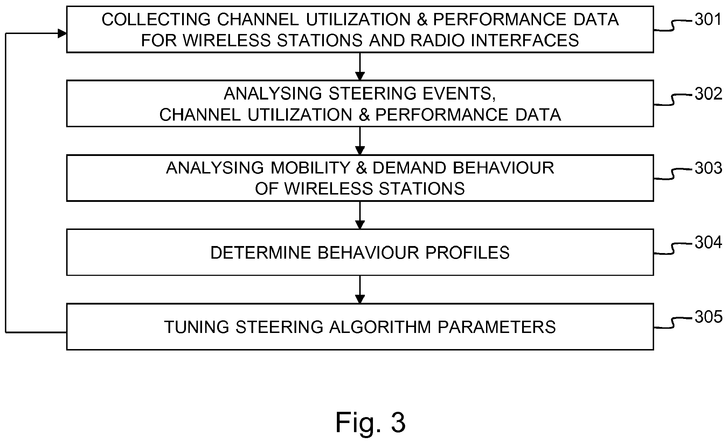

The steering algorithm controller 100 must implement different steps that will be described below in more detail with reference to Fig. 2 and Fig. 3. Firstly, steering algorithm performance assessment must be done per wireless station over a longer period of time to analytically capture potential improvements that steering triggering introduced. Secondly, the mobility and service demand behaviour must be analyzed per wireless station to generate profiles of demand and movements that can be associated with steering events. Lastly, the steering parameters are tuned to accommodate wireless station behaviour in similar situations.

Fig. 2 shows the functional blocks of an example embodiment of a steering algorithm controller 200, that may for instance correpsond to the steering algorithm controller 100 of Fig. 1. The steering algorithm controller 200 has a data collector 201, a steering algorithm assessor 202, a wireless station behaviour tracker 203, a profile estimator 204 and a steering algorithm tuner 205. The data collector 201 comprises a wireless station data collector 211 and a radio interface data collector 212. The steering algorithm assessor 202 comprises an event analyser 221 and a performance analyser 222. The wireless station behaviour tracker 203 comprises a mobility analyser 231, a demand analyser 232 and a demand distribution analyser 233.

The data collector 201 performs the step 301 of collecting channel utilization and performance data for wireless stations and radio interfaces available in the WLAN. This comprises data collection from the access point AP or 251 with a tunable collection frequency that typically ranges from once per minute up to once per hour. Data entails channel utilization and performance data on the wireless stations and on the radio interfaces. This data may be readily available in the access point 251 as certain protocols supported by wireless access points already collect this information. Channel utilization and performance data per wireless station as collected by 211 for instance comprise the average signal strength of the signal received from the wireless station by the radio interface it is connected to, the downstream bit rate from the radio interface to the wireless station, the upstream bit rate from the wireless station to the radio interface, the bit error rate measured on the link between the wireless station and the radio interface it is connected to, the retransmission rate on the link between the wireless station and the radio interface it is connected to, the channel utilization or airtime over the link between the wireless station and the radio interface it is connected to, the time-out period of this link, etc. A software agent running on the wireless access point 251 may collect this data directly from the wireless station or it may collect this data from other access points, for instance repeaters or extenders, in the WLAN. Channel utilization and performance data per radio interface as collected by 212 for instance comprise the channel utilization or airtime of that radio interface, the measured noise or interference from neighboring access points, the bit error rate measured by the radio interface across all wireless stations that make use of that radio interface, the retransmission rate measured by the radio interface across all wireless stations that connect to that radio interface, etc. A software agent running on the access point 251 collects this data for the radio interfaces supported by the access point 251 and collects this data from other access points in the WLAN, for instance repeaters or extenders, for the respective radio interfaces supported by such other access points. The collected channel utilization and performance data per wireless station and per radio interface is reported to the data collector 201 either automatically at a tunable frequency, or each time a request is received from the data collector 201.

The steering algorithm assessor 202 performs the step 302 of analysing steering events as well as the collected channel utilization and performance data. This step 302 embodies the process of analytical evaluation of how well the steering algorithm 250 running on access point 251 is performing. It is based for instance, but not limited, to following list of available parameters with respect to steering events: the amount of triggered steering events by steering algorithm 250 within a certain time interval, the amount of successful steering events or events that resulted in a wireless station being steered to a new radio interface within 10 seconds, the amount of failed steering events or events that resulted in a wireless station not having connected to an alternate radio interface within 2 minutes, the amount of fast failed steering events or events that resulted in a wireless station being steered slowly to a new radio interface, i.e. within the time interval from 10 seconds to 2 minutes, the average reconnection time for wireless stations after a steering event, the timeout period of wireless stations as a result of steering events, etc. The collection of such data by the steering algorithm assessor 202 covers a longer time window, typically in the order of days, weeks, or even months.

Analysing the steering events and channel utilization and performance data in step 302 entails two sub-steps, respectively executed by the event analyser 221 and the performance analyser 222.

In a first sub-step, the event analyser 221 captures statistics over all steering events occurred for a given wireless station. Each wireless station is assessed with respect to frequency of steering events and success / fail rate of such steering events. As a result, wireless stations are classified as stations that are steering eligible, i.e. wireless stations that likely need to be steered from one radio interface to another in the future because for instance they are highly mobile, versus wireless stations that are non-steering eligible, i.e. wireless stations that are unlikely to benefit from any steering in the future because they are for instance rather stationary.

In a second sub-step, the performance analyser 222 analytically evaluates the performance alteration caused by the steering events. More precisely, the performance analyser 222 accounts for the improvement in achievable throughput, the reduction in retransmission rate, the reduction in bit error rate, the increase in airtime, the increase of channel utilization, etc. per wireless station as a result of steering events triggered by the steering algorithm 250. The performance analyser 222 thus quantifies whether the performance of a wireless station improved because of a steering event or alternatively whether the steering event was obsolete since the improvement was not required, was negligible or even caused performance degradation and consequently had a negative impact on the user experience.

The wireless station behaviour tracker 203 performs the step 303 of analysing the mobility and service demand behaviour of wireless stations in the WLAN. This step 303 captures the behaviour of wireless stations that are being steered by the steering algorithm 250 hosted by the access point 250. This step 303 detects mobility patterns for wireless stations, demand peaks as well as how that fits in the overall network demand distribution. Goal is to associate certain behaviour detected by the wireless station behaviour tracker 203 with the steering attempts analysed by the steering algorithm assessor 202. Step 303 entails three sub-steps that are respectively executed by the mobility analyser 231, the demand analyser 232 and the demand distribution analyser 233.

The mobility analyser 231 detects mobility patterns that trigger a steering event per wireless station. Furthermore, many wireless station specific mobility patterns associated with certain points in time are obtained and evaluated against performed steering events. The frequency of movements and stationary moments is obtained and each wireless station is labelled as either highly mobile, occasionally mobile or relatively stationary.

The service demand analyser detects for each wireless station demand profiles that reflect required resources for certain service(s). The demand profile of a wireless station is compared with the achievable throughput and performed steering events to detect whether a certain steering event can for example be associated with wireless station starvation.

The demand distribution analyser 233 evaluates demands across the whole WLAN with respect to the load on each access point and the location of all wireless stations. The temporal demand across all radio interfaces available amongst the access points of the WLAN is derived to evaluate available resources against wireless station demand. This is used to infer whether a reason for steering was justified and needed.

The profile estimator 204 performs the step 304 of determining behaviour profiles. This step 204 combines the outputs of the steering algorithm assessment 202 and the device behaviour tracking 203 in order to process the settings for the steering algorithm per wireless station. It includes setting values of steering algorithm parameters as well as updating frequencies which can be associated with certain wireless station behaviour.

In a first example where the steering algorithm assessment 202 detected a poor performance of the steering algorithm 250 for a certain wireless station, the corresponding mobility and service demand profile of that wireless station is further analysed to infer whether the steering was needed. Appropriate settings for the steering algorithm are detected as a result of that analysis or the wireless station under consideration may be marked as steering non-compliant: it may for instance support an outdated technology standard. Consequently, the steering algorithm is disabled for that wireless station.

In a second example where the steering algorithm assessor 202 detected a good performance of the steering algorithm 250 for a certain wireless station, the corresponding mobility and service demand profile of that wireless station may be further analysed to understand whether the active settings of the steering algorithm for that wireless station can be replicated to other wireless stations with a same or similar mobility and service demand profile.

In a third example where no steering event took place but the steering algorithm assessor 202 detected a poor performance, further analysis may reveal the reason for not triggering the steering event, like for instance a long timeout, high breakpoint settings, etc. New steering algorithm parameter settings are derived to address this wireless station profile.

The steering algorithm tuner 205 performs the step 305 of dynamically tuning the steering algorithm parameters per wireless station. The outcome of this step 305 is a new steering algorithm that is profile dependent and adaptive over time. As an example, the step 305 may entail tuning the timeout period and breakpoint settings. This step 305 is executed remotely by the steering algorithm controller 200, running for instance on a management server in the network operators' management centre.

The steps 301-305 are executed iteratively, albeit possibly with a different frequency for the different steps. Feedback on performance of the wireless stations and radio interfaces after the steering algorithm has been tuned, is evaluated and used for reinforcement of a new iteration of the assessment step. Cases where the wireless station's performance was not improved are further analysed to better tune the steering algorithm parameters through more frequent tuning.

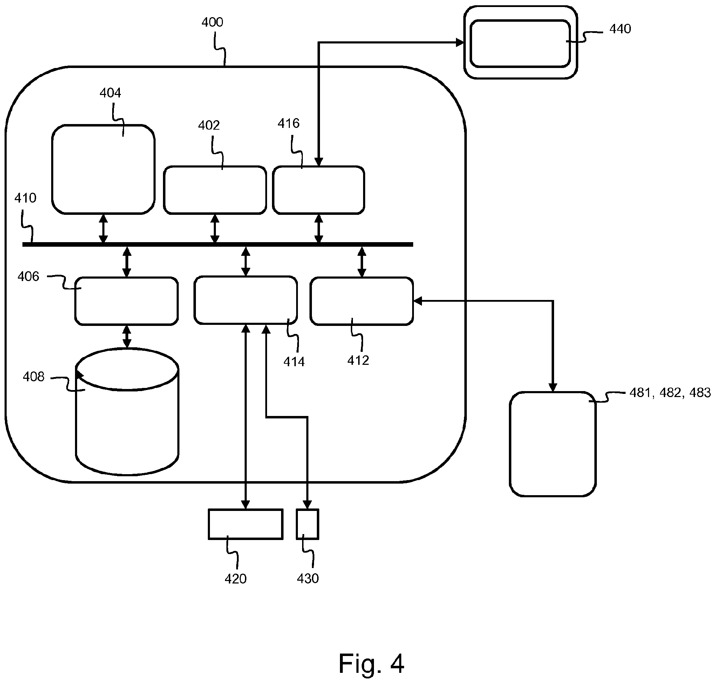

Fig. 4 shows a suitable computing system 400 enabling to implement embodiments of the method for controlling a steering algorithm in a WLAN according to the invention. Computing system 400 may in general be formed as a suitable general-purpose computer and comprise a bus 410, a processor 402, a local memory 404, one or more optional input interfaces 414, one or more optional output interfaces 416, a communication interface 412, a storage element interface 406, and one or more storage elements 408. Bus 410 may comprise one or more conductors that permit communication among the components of the computing system 400. Processor 402 may include any type of conventional processor or microprocessor that interprets and executes programming instructions. Local memory 404 may include a random-access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator or user to input information to the computing device 400, such as a keyboard 420, a mouse 430, a pen, voice recognition and/or biometric mechanisms, a camera, etc. Output interface 416 may comprise one or more conventional mechanisms that output information to the operator or user, such as a display 440, etc. Communication interface 412 may comprise any transceiver-like mechanism such as for example one or more Ethernet interfaces that enables computing system 400 to communicate with other devices and/or systems, for example with other computing devices 481, 482, 483. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage element(s) 408 above is/are described as a local disk, in general any other suitable computer-readable media such as a removable magnetic disk, optical storage media such as a CD or DVD, -ROM disk, solid state drives, flash memory cards, ... could be used. Computing system 400 could thus correspond to the controller circuitry 100 or 200 in the embodiments illustrated by Fig. 1 or Fig. 2.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

## Claims

1. A steering algorithm controller (100; 200) for controlling a steering algorithm (150; 250) in a wireless local area network, said steering algorithm (150; 250) selecting for one or more wireless station (171, 172) an optimal radio interface amongst available access points (151, 152, 153; 251) in said wireless local area network, said steering algorithm controller (100; 200) comprising:
- wireless station data collection means (211) configured to collect channel utilization and performance data for said one or more wireless station (171, 172);
- radio interface data collection means (212) configured to collect channel utilization and performance data for said one or more radio interface;
- steering algorithm performance assessment means (202) configured to analyse steering events resulting from said steering algorithm (150; 250) based on a comparison of channel utilization and performance data before and after a steering event by said steering algorithm, and to analyse said channel utilization and performance data for said one or more wireless station (171, 172) and said one or more radio interface, and configured to determine therefrom a performance score for said steering algorithm (150; 250);
- wireless station behaviour tracking means (203) configured to analyse behaviour of said one or more wireless station (171, 172) said wireless station behaviour tracking means (203) comprising:
- mobility analysis means (231) configured to analyse mobility of said one or more wireless station (171, 172) and classify each of said one or more wireless station (171, 172) respectively as highly mobile, occasionally mobile, or stationary;
- demand analysis means (232) configured to analyse demands by said one or more wireless station (171, 172) for respective services; and
- demand distribution analysis means (233) configured to analyse demands for said respective services across said one or more radio interfaces, and to determine therefrom a service demand distribution;
- profile estimation means (204) configured to determine behaviour profiles by combining the outputs of the steering algorithm performance assessment means (202) and the wireless station behaviour tracking means (203); and
- steering algorithm tuning means (205) configured to tune parameters of said steering algorithm (150; 250) based on said performance score of said steering algorithm (150; 250) and said behaviour profiles of said one or more wireless stations (171, 172).

2. A steering algorithm controller (100; 200) according to claim 1,
wherein said wireless station data collection means (211) and said radio interface data collection means (212) are configured to collect said channel utilization and performance data at a frequency ranging from once per minute up to once per hour.

3. A steering algorithm controller (100; 200) according to claim 1 or claim 2,
wherein said wireless station behaviour tracking means (203) are configured to analyse behaviour of said one or more wireless station (171, 172) at a frequency ranging from once per day up to once per month.

4. A steering algorithm controller (100; 200) according to one of the preceding claims,
wherein said steering algorithm performance assessment means (202) and said steering algorithm tuning means (205) are configured to iteratively determine said performance score for said steering algorithm (150; 250) and to iteratively tune said parameters of said steering algorithm (150; 250).

5. A steering algorithm controller (100; 200) according to one of the preceding claims,
wherein said steering algorithm performance assessment means (202) comprises:
- event analysing means (221) configured to analyse success rate of said steering events per wireless station and based thereon classify said one or more wireless station (171, 172) as steering eligible or non-steering eligible;
- performance analysing means (222) configured to quantify performance improvement or degradation as a result of said steering events and to determine therefrom said performance score.

6. A steering algorithm controller (100; 200) according to one of the preceding claims,
wherein said steering algorithm tuning means (205) is configured to perform one or more of the following settings per wireless station (171, 172):
- disable said steering algorithm (150; 250) for said wireless station (171, 172) in case of a poor performance score after a steering event;
- adapt said steering algorithm (150; 250) to infer steering events for said wireless station (171, 172) in case of a poor performance score in absence of a steering event; and
- replicate settings of said steering algorithm (150; 250) for other wireless stations with similar behaviour profile to said wireless station (171, 172) in case of a good performance score.

7. A method for controlling a steering algorithm (150; 250) in a wireless local area network, said steering algorithm (150; 250) selecting for one or more wireless station (171, 172) an optimal radio interface amongst available access points (151, 152, 153; 251) in said wireless local area network, said method comprising:
- collecting channel utilization and performance data (301) for said one or more wireless station (171, 172);
- collecting channel utilization and performance data (301) for said one or more radio interface;
- analysing steering events (302) resulting from said steering algorithm (150; 250) based on a comparison of channel utilization and performance data before and after a steering event by said steering algorithm, analysing said channel utilization and performance data for said one or more wireless station (171, 172) and said one or more radio interface, and determining therefrom a performance score for said steering algorithm (150; 250);
- analysing behaviour (303) of said one or more wireless station (171, 172) comprising:
- analysing mobility of said one or more wireless station (171, 172) and classifying each of said one or more wireless station (171, 172) respectively as highly mobile, occasionally mobile, or stationary;
- analysing demands by said one or more wireless station (171, 172) for respective services; and
- analysing demands for said respective services across said one or more radio interfaces, and to determine therefrom a service demand distribution;
- determining behaviour profiles (304) by combining the outputs of analysing steering events (302) and analysing behaviour (303); and
- tuning parameters (305) of said steering algorithm (150; 250) based on said performance score and said behaviour profiles of said one or more wireless stations (171, 172).

8. A computer program product comprising computer-executable instructions for causing a steering algorithm controller (100; 200) to perform at least the following:
- collecting channel utilization and performance data (301) for said one or more wireless station (171, 172);
- collecting channel utilization and performance data (301) for said one or more radio interface;
- analysing steering events (302) resulting from said steering algorithm (150; 250) based on a comparison of channel utilization and performance data before and after a steering event by said steering algorithm, analysing said channel utilization and performance data for said one or more wireless station (171, 172) and said one or more radio interface, and determining therefrom a performance score for said steering algorithm (150; 250);
- analysing behaviour (303) of said one or more wireless station (171, 172) comprising:
- analysing mobility of said one or more wireless station (171, 172) and classifying each of said one or more wireless station (171, 172) respectively as highly mobile, occasionally mobile, or stationary;
- analysing demands by said one or more wireless station (171, 172) for respective services; and
- analysing demands for said respective services across said one or more radio interfaces, and to determine therefrom a service demand distribution;
- determining behaviour profiles (304) by combining the outputs of analysing steering events (302) and analysing behaviour (303); and
- tuning parameters (305) of said steering algorithm (150; 250) based on said performance score and said behaviour profiles of said one or more wireless stations (171, 172).

9. A computer readable storage medium comprising a computer program comprising computer-executable instructions for performing the following steps when the program is run on the steering algorithm controller of one of claims 1-6:
- collecting channel utilization and performance data (301) for said one or more wireless station (171, 172);
- collecting channel utilization and performance data (301) for said one or more radio interface;
- analysing steering events (302) resulting from said steering algorithm (150; 250) based on a comparison of channel utilization and performance data before and after a steering event by said steering algorithm, analysing said channel utilization and performance data for said one or more wireless station (171, 172) and said one or more radio interface, and determining therefrom a performance score for said steering algorithm (150; 250);
- analysing behaviour (303) of said one or more wireless station (171, 172) comprising:
- analysing mobility of said one or more wireless station (171, 172) and classifying each of said one or more wireless station (171, 172) respectively as highly mobile, occasionally mobile, or stationary;
- analysing demands by said one or more wireless station (171, 172) for respective services; and
- analysing demands for said respective services across said one or more radio interfaces, and to determine therefrom a service demand distribution;
- determinin behaviour profiles (304) by combining the outputs of analysing steering events (302) and analysing behaviour (303); and
- tuning parameters (305) of said steering algorithm (150; 250) based on said performance score and said behaviour profiles of said one or more wireless stations (171, 172).

## Patentansprüche

1. Lenkalgorithmussteuerung (100; 200) zum Steuern eines Lenkalgorithmus (150; 250) in einem lokalen drahtlosen Netzwerk, wobei der Lenkalgorithmus (150; 250) unter verfügbaren Zugangspunkten (151, 152, 153; 251) im lokalen drahtlosen Netzwerk eine optimale Funkschnittstelle für eine oder mehrere drahtlose Stationen (171, 172) auswählt, wobei die Lenkalgorithmussteuerung (100; 200) Folgendes umfasst:
- Mittel (211) zum Sammeln von Daten von drahtlosen Stationen, die dazu ausgelegt sind, für die eine oder die mehreren drahtlosen Stationen (171, 172) Kanalnutzungs- und - leistungsdaten zu sammeln;
- Mittel (212) zum Sammeln von Daten von Funkschnittstellen, die dazu ausgelegt sind, für die eine oder die mehreren Funkschnittstellen Kanalnutzungs- und - leistungsdaten zu sammeln;
- Mittel (202) zur Beurteilung einer Lenkalgorithmusleistung, die dazu ausgelegt sind, auf Basis eines Vergleichs von Kanalnutzungs- und -leistungsdaten vor und nach einem Lenkereignis durch den Lenkalgorithmus aus dem Lenkalgorithmus (150; 250) resultierende Lenkereignisse zu analysieren und die Kanalnutzungs- und -leistungsdaten für die eine oder die mehreren drahtlosen Stationen (171, 172) und die eine oder die mehreren Funkschnittstellen zu analysieren, und dazu ausgelegt, daraus eine Leistungsbewertung für den Lenkalgorithmus (150; 250) zu bestimmen;
- Mittel (203) zum Verfolgen des Verhaltens von drahtlosen Stationen, die dazu ausgelegt sind, das Verhalten der einen oder der mehreren drahtlosen Stationen (171, 172) zu analysieren, wobei die Mittel (203) zum Verfolgen des Verhaltens von drahtlosen Stationen Folgendes umfassen:
- Mobilitätsanalysemittel (231), die dazu ausgelegt sind, die Mobilität der einen oder der mehreren drahtlosen Stationen (171, 172) zu analysieren und jede der einen oder der mehreren drahtlosen Stationen (171, 172) jeweils als sehr mobil, gelegentlich mobil oder stationär zu klassifizieren;
- Bedarfsanalysemittel (232), die dazu ausgelegt sind, den Bedarf der einen oder der mehreren drahtlosen Stationen (171, 172) an jeweiligen Diensten zu analysieren; und
- Bedarfsverteilungsanalysemittel (233), die dazu ausgelegt sind, den Bedarf an den jeweiligen Diensten über die eine oder die mehreren Funkschnittstellen zu analysieren und daraus eine Dienstbedarfsverteilung zu bestimmen;
- Profilschätzmittel (204), die dazu ausgelegt sind, durch Kombinieren der Ausgaben der Mittel (202) zur Beurteilung der Lenkalgorithmusleistung und der Mittel (203) zum Verfolgen des Verhaltens von drahtlosen Stationen Verhaltensprofile zu bestimmen; und
- Lenkalgorithmusabstimmmittel (205), die dazu ausgelegt sind, auf Basis der Leistungsbewertung des Lenkalgorithmus (150; 250) und der Verhaltensprofile der einen oder der mehreren drahtlosen Stationen (171, 172) Parameter des Lenkalgorithmus (150; 250) abzustimmen.

2. Lenkalgorithmussteuerung (100; 200) nach Anspruch 1,
wobei die Mittel (211) zum Sammeln von Daten von drahtlosen Stationen und die Mittel (212) zum Sammeln von Daten von Funkschnittstellen dazu ausgelegt sind, die Kanalnutzungs- und -leistungsdaten mit einer Häufigkeit von einmal pro Minute bis einmal pro Stunde zu sammeln.

3. Lenkalgorithmussteuerung (100; 200) nach Anspruch 1 oder Anspruch 2,
wobei die Mittel (203) zum Verfolgen des Verhaltens von drahtlosen Stationen, die dazu ausgelegt sind, das Verhalten der einen oder der mehreren drahtlosen Stationen (171, 172) mit einer Häufigkeit von einmal pro Tag bis einmal pro Monat zu analysieren.

4. Lenkalgorithmussteuerung (100; 200) nach einem der vorhergehenden Ansprüche,
wobei die Mittel (202) zu Beurteilung der Lenkalgorithmusleistung und die Mittel (205) zum Abstimmen des Lenkalgorithmus dazu ausgelegt sind, die Leistungsbewertung des Lenkalgorithmus (150; 250) wiederholt zu bestimmen und die Parameter des Lenkalgorithmus (150; 250) wiederholt abzustimmen.

5. Lenkalgorithmussteuerung (100; 200) nach einem der vorhergehenden Ansprüche,
wobei die Mittel (202) zu Beurteilung der Lenkalgorithmusleistung Folgendes umfassen:
- Ereignisanalysemittel (221), die dazu ausgelegt sind, eine Erfolgsrate der Lenkereignisse pro drahtloser Station zu analysieren und auf Basis davon die eine oder die mehreren drahtlosen Stationen (171, 172) als zum Lenken geeignet oder zum Lenken nicht geeignet zu klassifizieren;
- Leistungsanalysemittel (222), die dazu ausgelegt sind, eine Leistungsverbesserung oder -verschlechterung als ein Ergebnis der Lenkereignisse zu quantifizieren und daraus die Leistungsbewertung zu bestimmen.

6. Lenkalgorithmussteuerung (100; 200) nach einem der vorhergehenden Ansprüche,
wobei die Mittel (205) zum Abstimmen des Lenkalgorithmus dazu ausgelegt sind, pro drahtloser Station (171, 172) eine oder mehrere der folgenden Einstellungen durchzuführen:
- Deaktivieren des Lenkalgorithmus (150; 250) für die drahtlose Station (171, 172) bei einer geringen Leistungsbewertung nach einem Lenkereignis;
- Apassen des Lenkalgorithmus (150; 250), um bei einer geringen Leistungsbewertung und Fehlen eines Leistungsereignisses Lenkereignisse für die drahtlose Station (171, 172) abzuleiten; und
- Replizieren von Einstellungen des Lenkalgorithmus (150; 250) für andere drahtlose Stationen mit einem der drahtlosen Station (171, 172) ähnlichen Verhaltensprofil bei einer guten Leistungsbewertung.

7. Verfahren zum Steuern eines Lenkalgorithmus (150; 250) in einem lokalen drahtlosen Netzwerk, wobei der Lenkalgorithmus (150; 250) unter verfügbaren Zugangspunkten (151, 152, 153; 251) im lokalen drahtlosen Netzwerk eine optimale Funkschnittstelle für eine oder mehrere drahtlose Stationen (171, 172) auswählt, wobei das Verfahren Folgendes umfasst:
- Sammeln von Kanalnutzungs- und -leistungsdaten (301) für die eine oder die mehreren drahtlosen Stationen (171, 172);
- Sammeln von Kanalnutzungs- und -leistungsdaten (301) für die eine oder die mehreren Funkschnittstellen;
- Analysieren von Lenkereignissen (302), die aus dem Lenkalgorithmus (150; 250) resultieren, auf Basis eines Vergleichs von Kanalnutzungs- und -leistungsdaten vor und nach einem Lenkereignis durch den Lenkalgorithmus, Analysieren der Kanalnutzungs- und -leistungsdaten für die eine oder die mehreren drahtlose Stationen (171, 172) und die eine oder die mehreren Funkschnittstellen und Bestimmen einer Leistungsbewertung für den Lenkalgorithmus (150; 250) daraus;
- Analysieren des Verhaltens (303) der einen oder der mehreren drahtlosen Stationen (171, 172), was Folgendes umfasst:
- Analysieren der Mobilität der einen oder der mehreren drahtlosen Stationen (171, 172) und Klassifizieren jeder der einen oder der mehreren drahtlosen Stationen (171, 172) jeweils als sehr mobil, gelegentlich mobil oder stationär;
- Analysieren des Bedarfs der einen oder der mehreren drahtlosen Stationen (171, 172) an jeweiligen Diensten; und
- Analysieren des Bedarfs an den jeweiligen Diensten über die eine oder die mehreren Funkschnittstellen und Bestimmen einer Dienstbedarfsverteilung daraus;
- Bestimmen von Verhaltensprofilen (304) durch Kombinieren der Ausgaben des Analysierens von Lenkereignissen (302) und des Analysierens des Verhaltens (303); und
- Abstimmen von Parametern (305) des Lenkalgorithmus (150; 250) auf Basis der Leistungsbewertung und der Verhaltensprofile der einen oder der mehreren drahtlosen Stationen (171, 172).

8. Computerprogrammprodukt, das computerausführbare Anweisungen zum Bewirken, dass eine Lenkalgorithmussteuerung (100; 200) mindestens Folgendes durchführt, umfasst:
- Sammeln von Kanalnutzungs- und -leistungsdaten (301) für die eine oder die mehreren drahtlosen Stationen (171, 172);
- Sammeln von Kanalnutzungs- und -leistungsdaten (301) für die eine oder die mehreren Funkschnittstellen;
- Analysieren von Lenkereignissen (302), die aus dem Lenkalgorithmus (150; 250) resultieren, auf Basis eines Vergleichs von Kanalnutzungs- und -leistungsdaten vor und nach einem Lenkereignis durch den Lenkalgorithmus, Analysieren der Kanalnutzungs- und -leistungsdaten für die eine oder die mehreren drahtlose Stationen (171, 172) und die eine oder die mehreren Funkschnittstellen und Bestimmen einer Leistungsbewertung für den Lenkalgorithmus (150; 250) daraus;
- Analysieren des Verhaltens (303) der einen oder der mehreren drahtlosen Stationen (171, 172), was Folgendes umfasst:
- Analysieren der Mobilität der einen oder der mehreren drahtlosen Stationen (171, 172) und Klassifizieren jeder der einen oder der mehreren drahtlosen Stationen (171, 172) jeweils als sehr mobil, gelegentlich mobil oder stationär;
- Analysieren des Bedarfs der einen oder der mehreren drahtlosen Stationen (171, 172) an jeweiligen Diensten; und
- Analysieren des Bedarfs an den jeweiligen Diensten über die eine oder die mehreren Funkschnittstellen und Bestimmen einer Dienstbedarfsverteilung daraus;
- Bestimmen von Verhaltensprofilen (304) durch Kombinieren der Ausgaben des Analysierens von Lenkereignissen (302) und des Analysierens des Verhaltens (303); und
- Abstimmen von Parametern (305) des Lenkalgorithmus (150; 250) auf Basis der Leistungsbewertung und der Verhaltensprofile der einen oder der mehreren drahtlosen Stationen (171, 172).

9. Computerlesbares Speichermedium, das ein Computerprogramm umfasst, das computerausführbare Anweisungen zum Durchführen der folgenden Schritte umfasst, wenn das Programm auf der Lenkalgorithmussteuerung von einem der Ansprüche 1 bis 6 ausgeführt wird:
- Sammeln von Kanalnutzungs- und -leistungsdaten (301) für die eine oder die mehreren drahtlosen Stationen (171, 172);
- Sammeln von Kanalnutzungs- und -leistungsdaten (301) für die eine oder die mehreren Funkschnittstellen;
- Analysieren von Lenkereignissen (302), die aus dem Lenkalgorithmus (150; 250) resultieren, auf Basis eines Vergleichs von Kanalnutzungs- und -leistungsdaten vor und nach einem Lenkereignis durch den Lenkalgorithmus, Analysieren der Kanalnutzungs- und -leistungsdaten für die eine oder die mehreren drahtlose Stationen (171, 172) und die eine oder die mehreren Funkschnittstellen und Bestimmen einer Leistungsbewertung für den Lenkalgorithmus (150; 250) daraus;
- Analysieren des Verhaltens (303) der einen oder der mehreren drahtlosen Stationen (171, 172), was Folgendes umfasst:
- Analysieren der Mobilität der einen oder der mehreren drahtlosen Stationen (171, 172) und Klassifizieren jeder der einen oder der mehreren drahtlosen Stationen (171, 172) jeweils als sehr mobil, gelegentlich mobil oder stationär;
- Analysieren des Bedarfs der einen oder der mehreren drahtlosen Stationen (171, 172) an jeweiligen Diensten; und
- Analysieren des Bedarfs an den jeweiligen Diensten über die eine oder die mehreren Funkschnittstellen und Bestimmen einer Dienstbedarfsverteilung daraus;
- Bestimmen von Verhaltensprofilen (304) durch Kombinieren der Ausgaben des Analysierens von Lenkereignissen (302) und des Analysierens des Verhaltens (303); und
- Abstimmen von Parametern (305) des Lenkalgorithmus (150; 250) auf Basis der Leistungsbewertung und der Verhaltensprofile der einen oder der mehreren drahtlosen Stationen (171, 172).

## Revendications

1. Dispositif de commande d'algorithme d'orientation (100 ; 200) pour commander un algorithme d'orientation (150 ; 250) dans un réseau local sans fil, ledit algorithme d'orientation (150 ; 250) sélectionnant, pour une ou plusieurs stations sans fil (171, 172), une interface radio optimale parmi des points d'accès (151, 152, 153 ; 251) disponibles dans ledit réseau local sans fil, ledit dispositif de commande d'algorithme d'orientation (100 ; 200) comprenant :
- des moyens de collecte de données de stations sans fil (211) configurés pour collecter des données d'utilisation de canaux et de performances pour lesdites une ou plusieurs stations sans fil (171, 172) ;
- des moyens de collecte de données d'interfaces radio (212) configurés pour collecter des données d'utilisation de canaux et de performances pour lesdites une ou plusieurs interfaces radio ;
- des moyens d'évaluation de performances d'algorithme d'orientation (202) configurés pour analyser des événements d'orientation résultant dudit algorithme d'orientation (150 ; 250) sur la base d'une comparaison de données d'utilisation de canaux et de performances avant et après un événement d'orientation par ledit algorithme d'orientation, et pour analyser lesdites données d'utilisation de canaux et de performances pour lesdites une ou plusieurs stations sans fil (171, 172) et lesdites une ou plusieurs interfaces radio, et configurés pour déterminer à partir de là un score de performances pour ledit algorithme d'orientation (150 ; 250) ;
- des moyens de suivi de comportement de stations sans fil (203) configurés pour analyser un comportement desdites une ou plusieurs stations sans fil (171, 172), lesdits moyens de suivi de comportement de stations sans fil (203) comprenant :
- des moyens d'analyse de mobilité (231) configurés pour analyser une mobilité desdites une ou plusieurs stations sans fil (171, 172) et classer chacune desdites une ou plusieurs stations sans fil (171, 172) respectivement comme très mobile, occasionnellement mobile ou fixe ;
- des moyens d'analyse de demandes (232) configurés pour analyser des demandes de services respectifs par lesdites une ou plusieurs stations sans fil (171, 172) ; et
- des moyens d'analyse de répartition des demandes (233) configurés pour analyser des demandes desdits services respectifs sur lesdites une ou plusieurs interfaces radios, et pour déterminer à partir de là une répartition de demandes de service ;
- des moyens d'estimation de profils (204) configurés pour déterminer des profils de comportement en combinant les sorties des moyens d'évaluation de performances d'algorithme d'orientation (202) et des moyens de suivi de comportement de stations sans fil (203) ; et
- des moyens d'accord d'algorithme d'orientation (205) configurés pour accorder des paramètres dudit algorithme d'orientation (150 ; 250) sur la base dudit score de performances dudit algorithme d'orientation (150 ; 250) et desdits profils de comportement desdites une ou plusieurs stations sans fil (171, 172).

2. Dispositif de commande d'algorithme d'orientation (100 ; 200) selon la revendication 1,
dans lequel lesdits moyens de collecte de données de stations sans fil (211) et lesdits moyens de collecte de données d'interfaces radio (212) sont configurés pour collecter lesdites données d'utilisation de canaux et de performances à une fréquence allant d'une fois par minute à une fois par heure.

3. Dispositif de commande d'algorithme d'orientation (100 ; 200) selon la revendication 1 ou la revendication 2,
dans lequel lesdits moyens de suivi de comportement de stations sans fil (203) sont configurés pour analyser un comportement desdites une ou plusieurs stations sans fil (171, 172) à une fréquence allant d'une fois par jour à une fois par mois.

4. Dispositif de commande d'algorithme d'orientation (100 ; 200) selon d'une des revendications précédentes,
dans lequel lesdits moyens d'évaluation de performances d'algorithme d'orientation (202) et lesdits moyens d'accord d'algorithme d'orientation (205) sont configurés pour déterminer de manière itérative ledit score de performances pour ledit algorithme d'orientation (150 ; 250) et pour accorder de manière itérative lesdits paramètres dudit algorithme d'orientation (150 ; 250).

5. Dispositif de commande d'algorithme d'orientation (100 ; 200) selon d'une des revendications précédentes,
dans lequel lesdits moyens d'évaluation de performances d'algorithme d'orientation (202) comprennent :
- des moyens d'analyse des événement (221) configurés pour analyser un taux de réussite desdits événements d'orientation par station sans fil, et sur cette base, classer lesdites une ou plusieurs stations sans fil (171, 172) comme éligibles à l'orientation ou non éligibles à l'orientation ;
- des moyens d'analyse des performances (222) configurés pour quantifier une amélioration ou une dégradation des performances à la suite desdits événements d'orientation et pour déterminer à partir de là ledit score de performances.

6. Dispositif de commande d'algorithme d'orientation (100 ; 200) selon d'une des revendications précédentes,
dans lequel lesdits moyens d'accord d'algorithme d'orientation (205) sont configurés pour réaliser un ou plusieurs des réglages suivants par station sans fil (171, 172) :
- désactiver ledit algorithme d'orientation (150 ; 250) pour ladite station sans fil (171, 172) en cas d'un mauvais score de performances après un événement d'orientation ;
- adapter ledit algorithme d'orientation (150 ; 250) pour déduire des événements d'orientation pour ladite station sans fil (171, 172) en cas d'un mauvais score de performances en l'absence d'un événement d'orientation ; et
- reproduire des réglages dudit algorithme d'orientation (150 ; 250) pour d'autres stations sans fil ayant un profil de comportement similaire à celui de ladite station sans fil (171, 172) en cas d'un bon score de performances.

7. Procédé pour commander un algorithme d'orientation (150 ; 250) dans un réseau local sans fil, ledit algorithme d'orientation (150 ; 250) sélectionnant, pour une ou plusieurs stations sans fil (171, 172), une interface radio optimale parmi des points d'accès (151, 152, 153 ; 251) disponibles dans ledit réseau local sans fil, ledit procédé comprenant :
- la collecte de données d'utilisation de canaux et de performances (301) pour lesdites une ou plusieurs stations sans fil (171, 172) ;
- la collecte de données d'utilisation de canaux et de performances (301) pour lesdites une ou plusieurs interfaces radio ;
- l'analyse d'événements d'orientation (302) résultant dudit algorithme d'orientation (150 ; 250) sur la base d'une comparaison de données d'utilisation de canaux et de performances avant et après un événement d'orientation par ledit algorithme d'orientation, l'analyse desdites données d'utilisation de canaux et de performances pour lesdites une ou plusieurs stations sans fil (171, 172) et lesdites une ou plusieurs interfaces radio, et la détermination à partir de là d'un score de performances pour ledit algorithme d'orientation (150 ; 250) ;
- l'analyse du comportement (303) desdites une ou plusieurs stations sans fil (171, 172) comprenant :
- l'analyse d'une mobilité desdites une ou plusieurs stations sans fil (171, 172) et le classement de chacune desdites une ou plusieurs stations sans fil (171, 172) respectivement comme très mobile, occasionnellement mobile ou fixe ;
- l'analyse de demandes de services respectifs par lesdites une ou plusieurs stations sans fil (171, 172) ; et
- l'analyse de demandes desdits services respectifs sur lesdites une ou plusieurs interfaces radios, et la détermination à partir de là d'une répartition de demandes de service ;
- la détermination de profils de comportement (304) en combinant les sorties de l'analyse des événements d'orientation (302) et de l'analyse du comportement (303) ; et
- l'accord de paramètres (305) dudit algorithme d'orientation (150 ; 250) sur la base dudit score de performances et desdits profils de comportement desdites une ou plusieurs stations sans fil (171, 172).

8. Produit de programme informatique comprenant des instructions exécutables par ordinateur pour amener un dispositif de commande d'algorithme d'orientation (100 ; 200) à réaliser au moins ce qui suit :
- la collecte de données d'utilisation de canaux et de performances (301) pour lesdites une ou plusieurs stations sans fil (171, 172) ;
- la collecte de données d'utilisation de canaux et de performances (301) pour lesdites une ou plusieurs interfaces radio ;
- l'analyse d'événements d'orientation (302) résultant dudit algorithme d'orientation (150 ; 250) sur la base d'une comparaison de données d'utilisation de canaux et de performances avant et après un événement d'orientation par ledit algorithme d'orientation, l'analyse desdites données d'utilisation de canaux et de performances pour lesdites une ou plusieurs stations sans fil (171, 172) et lesdites une ou plusieurs interfaces radio, et la détermination à partir de là d'un score de performances pour ledit algorithme d'orientation (150 ; 250) ;
- l'analyse du comportement (303) desdites une ou plusieurs stations sans fil (171, 172) comprenant :
- l'analyse d'une mobilité desdites une ou plusieurs stations sans fil (171, 172) et le classement de chacune desdites une ou plusieurs stations sans fil (171, 172) respectivement comme très mobile, occasionnellement mobile ou fixe ;
- l'analyse de demandes de services respectifs par lesdites une ou plusieurs stations sans fil (171, 172) ; et
- l'analyse de demandes desdits services respectifs sur lesdites une ou plusieurs interfaces radios, et la détermination à partir de là d'une répartition de demandes de service ;
- la détermination de profils de comportement (304) en combinant les sorties de l'analyse des événements d'orientation (302) et de l'analyse du comportement (303) ; et
- l'accord de paramètres (305) dudit algorithme d'orientation (150 ; 250) sur la base dudit score de performances et desdits profils de comportement desdites une ou plusieurs stations sans fil (171, 172).

9. Support de stockage lisible par ordinateur comprenant un programme informatique comprenant des instructions exécutables par ordinateur pour réaliser les étapes suivantes lorsque le programme est exécuté sur le dispositif de commande d'algorithme d'orientation de l'une des revendications 1 à 6 :
- la collecte de données d'utilisation de canaux et de performances (301) pour lesdites une ou plusieurs stations sans fil (171, 172) ;
- la collecte de données d'utilisation de canaux et de performances (301) pour lesdites une ou plusieurs interfaces radio ;
- l'analyse d'événements d'orientation (302) résultant dudit algorithme d'orientation (150 ; 250) sur la base d'une comparaison de données d'utilisation de canaux et de performances avant et après un événement d'orientation par ledit algorithme d'orientation, l'analyse desdites données d'utilisation de canaux et de performances pour lesdites une ou plusieurs stations sans fil (171, 172) et lesdites une ou plusieurs interfaces radio, et la détermination à partir de là d'un score de performances pour ledit algorithme d'orientation (150 ; 250) ;
- l'analyse du comportement (303) desdites une ou plusieurs stations sans fil (171, 172) comprenant :
- l'analyse d'une mobilité desdites une ou plusieurs stations sans fil (171, 172) et le classement de chacune desdites une ou plusieurs stations sans fil (171, 172) respectivement comme très mobile, occasionnellement mobile ou fixe ;
- l'analyse de demandes de services respectifs par lesdites une ou plusieurs stations sans fil (171, 172) ; et
- l'analyse de demandes desdits services respectifs sur lesdites une ou plusieurs interfaces radios, et la détermination à partir de là d'une répartition de demandes de service ;
- la détermination de profils de comportement (304) en combinant les sorties de l'analyse des événements d'orientation (302) et de l'analyse du comportement (303) ; et
- l'accord de paramètres (305) dudit algorithme d'orientation (150 ; 250) sur la base dudit score de performances et desdits profils de comportement desdites une ou plusieurs stations sans fil (171, 172).
